# EUROPÄISCHE PATENTSCHRIFT

(11) **EP 1 702 199 B1**
(45) Veröffentlichungstag und Bekanntmachung des Hinweises auf die Patenterteilung: **20.02.2013**
(21) Anmeldenummer: 04804986.0
(22) Anmeldetag: 22.12.2004
(51) Int. Cl.: H04L 29/08, G01C 21/00, H04L 29/06, H04W 4/02

(54) **INBETRIEBNAHME EINER ANWENDUNG IN EINEM MOBILEN KLIENTEN**
STARTING UP AN APPLICATION OF A MOBILE CLIENT
MISE EN SERVICE D'UNE APPLICATION CHEZ UN CLIENT MOBILE

(30) Priorität: 27.12.2003 DE 10361628
(43) Veröffentlichungstag der Anmeldung: 20.09.2006
(73) Patentinhaber: ROBERT BOSCH GMBH, 70442 Stuttgart (DE)
(72) Erfinder: POECHMUELLER, Werner, 31139 Hildesheim (DE); DE BOER, Gerrit, 31139 Hildesheim (DE); LAEDKE, Michael, 31134 Hildesheim (DE)
(86) Internationale Anmeldenummer: PCT/EP2004/053652
(87) Internationale Veröffentlichungsnummer: WO 2005/064274

(56) Entgegenhaltungen:
- EP-A- 1 189 409
- WO-A-00/77620
- WO-A-02/37314
- US-A1- 2003 055 553

## Beschreibung

Die vorliegende Erfindung betrifft ein Verfahren zum Inbetriebnehmen einer Anwendung in einem mobilen informationsverarbeitenden Gerät, kurz als Klient bezeichnet, wobei für den Betrieb der Anwendung ein Bestand an Information in dem Klienten erforderlich ist, der sich aus Programmanweisungen und Daten, auf welche diese Anweisungen zugreifen, zusammensetzen kann.

Die Übertragung des benötigten Informationsbestandes zum Klienten ist mitunter umständlich und beschwerlich, insbesondere dann, wenn es sich bei dem Klienten um ein in einer mobilen Plattform wie etwa einem Kraftfahrzeug fest eingebautes Gerät handelt, das nicht wie z.B. ein Laptop ohne weiteres von der mobilen Plattform getrennt und an ein stationäres Datennetz angeschlossen werden kann, um die benötigte Information zu empfangen. Je nach Variabilität des Informationsbestandes sind für kraftfahrzeuggestützte Klienten unterschiedliche Techniken zur Versorgung mit dem erforderlichen Informationsbestand eingesetzt worden. So ist z.B. bei einem Motorsteuergerät die Variabilität des Informationsbestandes gering, so dass es meist genügt, den Informationsbestand in Form eines nichtflüchtigen Speicherbausteins fest in das Steuergerät einzubauen. Eine Aktualisierung des Informationsbestandes ist zwar nicht völlig ausgeschlossen, aber beschwerlich.

Andere informationsverarbeitende Geräte in Kraftfahrzeugen, wie insbesondere Fahrzeugnavigationssysteme, benötigen einen wesentlich umfangreicheren Informationsbestand, der außerdem von Zeit zu Zeit aktualisiert werden muss, um die Effektivität des Navigationssystems zu gewährleisten. Hier ist es gängige Praxis, den erforderlichen Informationsbestand oder zumindest veränderliche Teile desselben auf tragbaren Datenträgern, insbesondere CD-Roms, aufzuzeichnen, die in ein Lesegerät des Navigationssystems eingesetzt werden können. Ein solches Verfahren ist praktikabel, wenn die Häufigkeit, mit der die Datenträger aktualisiert werden müssen, nicht zu groß ist. Tages- oder gar stundenaktuelle Navigationsinformationen, wie sie erforderlich sind, um temporäre Hindernisse wie Baustellen und Staus zu umfahren, können auf diese Weise nicht sinnvoll bereitgestellt werden.

Eine kurzfristige Bereitstellung von Informationen ist im Prinzip auf dem Funkweg, insbesondere über eine Punkt-zu-Punkt-Wählverbindung in einem Mobilfunknetz, möglich, doch stehen dem hohe Verbindungskosten und beschränkte Übertragungsbandbreiten entgegen, die bei großen Datenmengen zu nicht zu vernachlässigenden Übertragungsverzögerungen führen. Funkübertragung stellt daher nur für Anwendungen mit sehr begrenztem Datenbedarf eine Lösung dar.

Die US 2003/0055553 A1 beschreibt ein elektronisches System in einem Kraftfahrzeug, welches in verschiedenen Speicher Datenbanken wie beispielsweise eine Navigationskarte und Anwendungsprogramme wie beispielsweise eine Navigationsanwendung umfasst. Diese Daten können auf verschiedene Weise aktualisiert werden. Beschrieben ist dabei der Austausch des Speichers, die Aktualisierung über eine Hochgeschwindigkeitsdatenverbindung sowie die Aktualisierung über Mobilfunk. Ferner ist vorgesehen, dass Daten im Rahmen der Anwendung drahtlos übermittelt werden, beispielsweise eine berechnete Route oder Korrekturdaten für die Ortsbestimmung. Es handelt sich bei den im Speicher befindlichen Datenbanken und Anwendungen um den permanenten Teil des Informationsbestandes, während es sich beispielsweise bei den Ortsbestimmungskorrekturdaten um den temporären Teil des Informationsbestandes handelt. Letzterer wird auf dem Funkweg übermittelt, während der permanente Teil durch die oben angegebenen Maßnahmen aktualisiert werden können. Die genannten Maßnahmen sind dabei als Alternativlösungen. So wird der permanente Datenbestand eines Fahrzeugsystems entweder durch Austausch des Datenträgers oder durch Anschluss einer Hochgeschwindigkeitsdatenverbindung im Fahrzeug vorgenommen.

Aufgabe der vorliegenden Erfindung ist, ein Verfahren zum Inbetriebnehmen einer Anwendung in einem mobilen informationsverarbeitenden Gerät zu schaffen, das auch bei einem umfangreichen für den Betrieb der Anwendung erforderlichen Informationsbestand eine zeitnahe Aktualisierung unter wirtschaftlichen Bedingungen ermöglicht.

Die Aufgabe wird gelöst durch ein Verfahren gemäß Anspruch 1.

Durch die Aufteilung des Informationsbestandes in einen permanenten und einen temporären Teil wird zum einen erreicht, dass für den permanenten Teil ein wirtschaftlicher Übertragungsweg gewählt werden kann, der eine preiswerte Übertragung großer Datenmengen erlaubt. Da er nur selten in Anspruch genommen werden muss, kann für diesen Übertragungsweg ein etwas geringeres Maß an Benutzerfreundlichkeit als für den Funkweg in Kauf genommen werden. Andererseits reduzieren sich erheblich die Kosten der Funkübertragung, da sie nur noch für einen kleineren Teil der Daten in Anspruch genommen werden muss. Indem der permanente Teil des Informationsbestandes an einen Zwischenserver übermittelt wird, wird für die Benutzer der informationsverarbeitenden Geräte die Möglichkeit geschaffen, diese Informationen im Bedarfsfalle selbst an einem solchen Zwischenserver abzuholen; dadurch entfällt für den Anbieter der Anwendung die Notwendigkeit, eine gro-βe Zahl von Datenträgern für die permanente Information anzufertigen und zu vertreiben. Wenn die Übertragung des Schritts c) über eine Datenleitung erfolgt, entfällt der Bedarf nach einem solchen Datenträger vollständig; anderenfalls gibt es die Möglichkeit, einen solchen Datenträger jeweils bei Bedarf am Zwischenserver herzustellen.

Vorzugsweise existiert eine große Zahl von Zwischenservern, die mit dem Hauptserver verbindbar oder verbunden sind, und von denen aus ein Benutzer eine Anforderung an den zentralen Server senden kann, die diesen veranlasst, den permanenten Teil der Information an den anfordernden Zwischenserver zu senden.

Insbesondere wenn es sich bei dem permanenten Teil um eine neue Version einer existierenden Anwendung oder eine für Benutzer der existierenden Anwendung eventuell interessante neue Anwendung handelt, und diese Benutzer beim Betreiber registriert sind, so können diese Benutzer - z. B. per E-Mail - vom zentralen Server über die Verfügbarkeit der neuen Version oder Anwendung informiert werden, um sie zu veranlassen, diese anzufordern.

Vorzugsweise erfolgt die Übertragung vom Hauptserver zum Zwischenserver in Schritt b) über eine Wählverbindung. Dies erlaubt die Versorgung von weit beabstandeten, gegebenenfalls weltweit verteilten Zwischenservern ohne hohen Aufwand für eine Telekommunikations-Infrastruktur.

Bevor der permanente Teil des Informationsbestandes an einen solchen Zwischenserver übertragen wird, kann es zweckmäßig sein, vorab Daten von dem Gerät, das als Empfänger für die Information vorgesehen ist, an den Hauptserver zu übertragen, die Angaben zur Identität des mobilen Geräts oder dessen Aufenthaltsort beinhalten. Daten zum Aufenthaltsort ermöglichen es dem Hauptserver, den permanenten Teil der Informationen gezielt an den mit dem mobilen Gerät am besten erreichbaren Zwischenserver, z.B. in einer zum aktuellen Standort eines Kraftfahrzeugs, in dem das mobile Gerät eingebaut ist, benachbarten KFZ-Werkstatt - zu übermitteln. Anhand von Daten zur Identität des anfordernden Geräts kann der zentrale Server vor Übermittlung des permanenten Teils an den Zwischenserver mit diesen Daten verknüpfte technische Eigenschaften des Geräts erkennen und unter Berücksichtigung dieser Eigenschaften aus mehreren Versionen der permanenten Informationen diejenige auszuwählen, die mit dem anfordernden Gerät kompatibel ist und/oder die Übertragung zu verweigern, wenn das Gerät als zur Verarbeitung dieser permanenten Informationen ungeeignet erkannt wird.

Eine entsprechende Übertragung von Daten zur Identität des mobilen Geräts kann zweckmäßigerweise auch vor dem Schritt d) stattfinden, um es dem Hauptserver zu ermöglichen, zu prüfen, ob das mobile Gerät überhaupt zum Empfang der temporären Informationen geeignet ist.

Die Übertragung dieser Daten zum Hauptserver läuft vorzugsweise unter der Steuerung von Programmanweisungen ab, die zum permanenten Teil des Informationsbestandes gehören.

Ein besonders hohes Maß an Flexibilität wird erreicht, wenn der zu übertragende temporäre Teil des Informationsbestands von dem zentralen Server anhand von zuvor von dem Gerät auf dem Funkweg übermittelter Daten erzeugt, z.B. berechnet, aus anderen Daten zusammengestellt, etc., wird. So wird z.B., wenn das Gerät ein Navigationssystem ist, die Möglichkeit geschaffen, temporäre Informationen selektiv für eine Region, in der sich das System gegenwärtig befindet, zu übertragen, und so die auf dem Funkweg zu übertragende Datenmenge auf das tatsächlich erforderliche Mindestmaß zu begrenzen. Andere Möglichkeiten sind, wenn es sich bei dem Gerät um ein Motorsteuergerät handelt, an eine vorübergehende Situation exakt angepasste Steuerinformation zu übertragen, z.B., um den Betrieb des Motors an örtlich und/oder jahreszeitlich wechselnde Eigenschaften des Kraftstoffs anzupassen, im Falle einer Störung Selbsttests durchzuführen und anhand der vom Gerät an den Zwischenserver gemeldeten Testergebnisse weitere Testprogrammteile aus einem Bestand auszuwählen und an das Gerät zu übertragen, etc.. Auf diese Weise ist eine Diagnose von Funktionsstörungen des Kraftfahrzeugs in erheblichem Umfang möglich, ohne dass das Fahrzeug in eine Werkstatt gebracht werden muss. Unter günstigen Umständen kann auf diese Weise ein defektes Einzelteil ohne unmittelbaren Zugriff auf das Kraftfahrzeug ermittelt werden, und der für eine Reparatur erforderliche Werkstattaufenthalt des Fahrzeugs reduziert sich auf die zum Austauschen des Einzelteils erforderliche Zeit.

Weitere Merkmale und Vorteile des erfindungsgemäßen Verfahrens ergeben sich aus der nachfolgenden Beschreibung von Ausführungsbeispielen unter Bezugnahme auf die beigefügten Figuren. Es zeigen:
- Fig. 1: ein Blockdiagramm eines Datenübertragungssystems zur Durchführung des erfindungsgemäßen Verfahrens;
- Fig. 2: ein Blockdiagramm eines fahrzeuggestützten informationsverarbeitenden Geräts; und
- Fig. 3, 4: Flussdiagramme von Ausführungsbeispielen des erfindungsgemäßen Verfahrens.

### Beschreibung der Ausführungsbeispiele

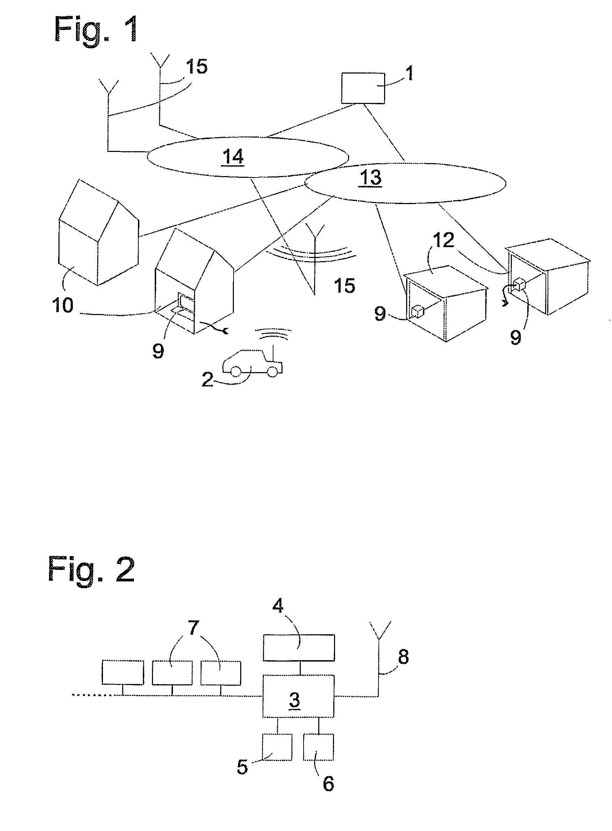

Fig. 1 ist ein Blockdiagramm eines Datenübertragungssystems, in welchem die vorliegende Erfindung anwendbar ist. Das Datenübertragungssystem umfasst einen zentralen Server 1, an welchem Information, die von mobilen informationsverarbeitenden Geräten zum Durchführen einer bestimmten Anwendung benötigte Information gespeichert ist. Als Beispiel für ein solches mobiles informationsverarbeitendes Gerät wird hier ein Bordcomputersystem eines Kraftfahrzeugs 2 betrachtet.

Der zentrale Server 1 ist über ein leitungsgebundenes Fernmeldenetzwerk 13 mit einer Vielzahl von Zwischenservern 9 verbunden, bei denen es sich z.B. um einen in einer Wohnung 10 oder Arbeitsstätte eines Benutzers aufgestellten PC handeln kann. Die Zwischenserver verfügen in üblicher Weise über eine Schnittstelle für eine Datenleitung zum Anschließen des mobilen Geräts des Fahrzeugs 2 oder über eine Schreibvorrichtung für tragbare Datenträger wie etwa ein Diskettenlaufwerk oder einen CD-Brenner. Auch ein transportabler Halbleiterspeicher wie etwa ein so genannter Memory Stick oder ein mobiler Kleinstcomputer (Palmtop, Personal Digital Assistant PDA) kommen hier als Datenträger in Betracht.

Des weiteren ist der zentrale Server 1 an ein zellulares Mobilfunk-Kommunikationssystem 14 wie etwa ein GSM- oder UMTS-Netz angeschlossen, das eine Mehrzahl von geographisch verteilten Basisstationen 15 aufweist.

Ein Blockdiagramm des mobilen Geräts ist in Fig. 2 gezeigt. Es umfasst einen Bordcomputer 3 des Kraftfahrzeugs 2, mit einem Prozessor und Arbeitsspeicher, eine Mensch-Maschine-Schnittstelle 4, ein Lesegerät 5 für einen tragbaren Datenträger wie etwa eine Diskette, eine CD-Rom oder dergleichen und/oder eine Datenübertragungsschnittstelle 6, die die Übertragung von Informationen an den Bordcomputer 3 über eine elektrische oder optische Leitung ermöglicht. Eine Vielzahl von Sensoren und/oder Aktoren 7 zum Erfassen und/oder Beeinflussen von Betriebsparametern des Kraftfahrzeugs 2 sind über einen Bus an den Bordcomputer 3 angeschlossen. Des Weiteren ist eine Funkschnittstelle 8, insbesondere für die Kommunikation mit dem Netz 14, angeschlossen. Die Mensch-Maschine-Schnittstelle 4 umfasst Aus- und Eingabemittel, wobei die Ausgabemittel das Anzeigen von Betriebsparametern des Fahrzeugs ermöglichen, von denen wenigstens manche durch die Eingabemittel wählbar sein können.

Als ein erstes Beispiel für eine Anwendung soll hier ein Fahrzeugnavigationssystem betrachtet werden.

Die am zentralen Server 1 gespeicherte Information ist unterteilt in einen permanenten Teil und einen temporären Teil. Der permanente Teil umfasst im Wesentlichen Programmanweisungen, die von dem Bordcomputer 3 des Kraftfahrzeugs 2 zur Realisierung des Navigationssystems ausgeführt werden müssen, sowie geographische Informationen von langfristiger Relevanz für den Benutzer des Kraftfahrzeugs 2. Diese langfristig relevanten Informationen umfassen insbesondere Informationen zum Verlauf von Verkehrswegen in einer Gegend, in der sich das Kraftfahrzeug 2 regelmäßig aufhält. Die temporären Informationen sind Informationen von kurzfristiger Relevanz, insbesondere über Staus, Baustellen und andere Hindernisse auf den in den permanenten Informationen definierten Verkehrswegen.

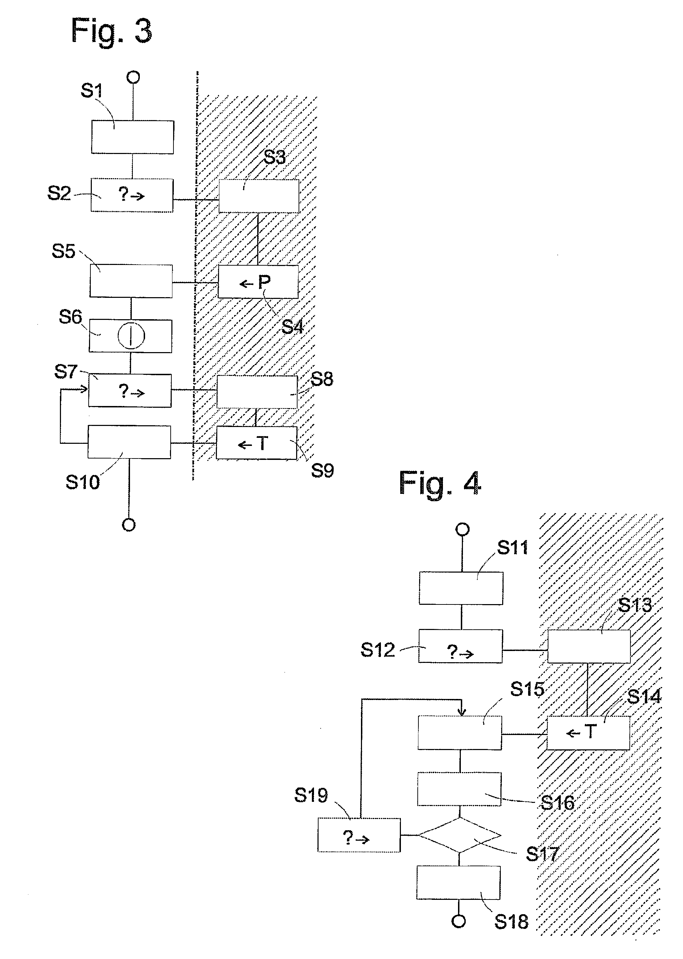

Um den Bordcomputer als Fahrzeug-Navigationssystem tatsächlich nutzen zu können, wird das in Fig. 3 schematisch dargestellte Verfahren ausgeführt. Zunächst fordert ein Benutzer des Kraftfahrzeugs 2 die Übertragung des permanenten Teils der hierfür benötigen Informationen vom zentralen Server 1 an einen Zwischenserver 9 an.

Diese Anforderung kann auf diverse Weisen übertragen werden. Eine zweckmäßige Möglichkeit ist, in Schritt S1 die Anforderung in die Mensch-Maschine-Schnittstelle 4 einzugeben, die zu diesem Zweck z.B. ein Auswahlmenü mit möglichen Zusatzfunktionen des Bordcomputers 3 anzeigen kann, die durch Übertragung entsprechender Software auf den Bordcomputer 3 realisierbar sind. Diese Anforderung wird in Schritt S2 über die Funkschnittstelle 8 und das zellulare Funkkommunikationsnetz 14 an den zentralen Server 1 übertragen. Anhand von vom Bordcomputer 3 gesendeter Informationen über den Standort des Kraftfahrzeugs 2, z.B. einer vom Benutzer beim Anfordern in die Mensch-Maschine-Schnittstelle 4 eingegebenen Adresse, ist der zentrale Server 1 in der Lage, einen Zwischenserver in örtlicher Nachbarschaft zum Kraftfahrzeug 2 zu identifizieren (S3) und den benötigten permanenten Teil der Information dorthin zu übertragen (S4). Bei diesem Zwischenserver kann es sich insbesondere um den Computer 9 einer Werkstatt 12 in der Nachbarschaft des Fahrzeugs 2 handeln; dies ist insbesondere dann zweckmäßig, wenn zur Inbetriebnahme des Navigationssystems außer der reinen Informationsübertragung an den Bordcomputer 3 noch Eingriffe am Fahrzeug erforderlich sind. Es könnte sich aber auch bei dem Zwischenserver um den privaten PC 9 des Benutzers in dessen Wohnung 10 handeln, an den die Information übertragen wird, z.B. unter Nutzung einer dem zentralen Server 1 beim Senden der Anforderung mitgeteilten E-Mail-Adresse.

Die in Schritt S2 vom Bordcomputer 3 an den zentralen Server 1 übertragene Information über den Standort des Fahrzeugs 2 kann vom zentralen Server 1 außerdem noch dazu genutzt werden, aus dem am Server 1 vorhandenen Bestand an kartographischer Information, die im Prinzip die ganze Welt abdecken könnte, denjenigen Teil, im Allgemeinen ein Land, einen Landesteil oder dergleichen, auszuwählen, der den Standort des Fahrzeugs abdeckt, um ihn anschließend an den ausgewählten Zwischenserver 9 zu senden.

Die im Schritt S2 übertragene Information umfasst zweckmäßigerweise auch Angaben zur Identität bzw. zu einem Typ des Bordcomputersystems, die vom Bordcomputer 3 ohne Zutun des Benutzers übertragen wird und die es dem zentralen Server 1 ermöglicht, zu erkennen, welche von eventuell mehreren existierenden Versionen der Programmanweisungen des Navigationssystems auf dem Bordcomputer 3 lauffähig ist, diese in Schritt S3 auszuwählen und in Schritt S4 zu übertragen.

Da die Übertragung zwischen dem zentralen Server 1 und dem Zwischenserver 9 über das leitungsgebundene Fernmeldenetzwerk 13 erfolgt, können große Informationsmengen schnell und preiswert übertragen werden. Eine Übertragung der Information vom Zwischenserver 9 zum Bordcomputer 3 (Schritt S5) kann mit Hilfe einer Leitungsverbindung zwischen dem Zwischenserver und der Schnittstelle 6 des Bordcomputersystems erfolgen. Eine solche Leitungsverbindung kann Teil eines leitungsgebundenen lokalen Netzes sein. Denkbar ist aber auch die Übertragung im Rahmen eines drahtlosen lokalen Netzes wie etwa eines Bluetooth-Netzes. Die Möglichkeit der leitungs- oder netzgestützten Übertragung wird man insbesondere dann nutzen, wenn es sich bei dem Zwischenserver 9 um den Computer der Werkstatt 12 handelt, da dort im Allgemeinen der Abstand zwischen dem Computer und dem Kraftfahrzeug 2 klein genug gemacht werden kann, so dass eine Übertragung per Kabel praktikabel ist. Bei Übertragung auf den privaten PC des Benutzers wird man zur Weiterübertragung auf den Bordcomputer 3 eher einen tragbaren Datenträger wie etwa eine Diskette oder CD-Rom wählen, die der Benutzer auf seinen PC beschreibt und anschließend in das Lesegerät 5 des Bordcomputers 3 einlegt. Auf diese Weise wird gleichzeitig eine Sicherungskopie der Informationen geschaffen.

Nachdem auf diese Weise der permanente Teil der für das Navigationssystem benötigten Informationen in den Bordcomputer 3 geladen worden ist, führt dieser unter der Kontrolle der in dieser Information enthaltenen Programmanweisungen die nachfolgend beschriebenen Verfahrensschritte aus.

Jeweils nach Anlassen des Fahrzeugs in Schritt S6 richtet der Bordcomputer 3 über das Mobilfunknetz eine Anforderung an den zentralen Server 1 (Schritt S7), die für den ordnungsgemäßen Betrieb des Navigationssystems benötigte temporäre Information zu liefern. Die an den zentralen Server übertragene Anforderung enthält Angaben zur Identität des Bordcomputers wie z.B. eine Seriennummer des Bordcomputers oder des an ihn übertragenen permanenten Teils der Information, die es dem Server 1 ermöglicht, in Schritt S8 zu überprüfen, ob der Bordcomputer 3 zum Bezug der temporären Information berechtigt ist. Eine solche Berechtigung könnte fehlen, wenn die temporäre Information nur im Rahmen eines zwischen dem Benutzer des Fahrzeugs und dem Betreiber des zentralen Servers 1 geschlossenen Vertrages übertragen wird, der eventuell zum Zeitpunkt der Anforderung nicht mehr besteht, oder wenn es aus beliebigen anderen Gründen für den Betreiber des zentralen Servers 1 nicht möglich ist, Kosten für die Übertragung der temporären Informationen oder für deren laufende Erstellung und Bereithaltung dem Benutzer in Rechnung zu stellen. Denkbar ist auch, dass wenn mehrere Versionen des Bordcomputers 3 bzw. von in diesen geladener permanenter Information existieren, der zentrale Server im Rahmen der Legitimationsprüfung des Schritts S8 unter mehreren Versionen der temporären Information, die für den jeweils anfordernden Bordcomputer geeignete Version auswählt. Wenn die Legitimationsprüfung ergibt, dass die temporäre Information übertragen werden kann, so geschieht dies in Schritt S9. Die temporäre Information kann z.B. Informationen über Baustellen oder Verkehrsstaus in einem Gebiet, in dem es sich aufhält, über besondere, nicht ständige Veranstaltungen in diesem Gebiet, etc., enthalten. Denkbar ist auch, im Rahmen der temporären Information langfristig relevante geographische Informationen, wie etwa über die geographische Lage von Verkehrswegen in einer geographischen Zone, in der sich das Fahrzeug aktuell aufhält, zu übertragen, wenn diese Zone nicht die Region ist, in der sich das Fahrzeug üblicherweise aufhält und die infolgedessen nicht von den permanenten Informationen abgedeckt ist.

Nach Übertragung der temporären Information ist der vom Navigationssystem benötigte Informationsbestand komplett, und das System wird in Schritt S10 in Betrieb genommen.

Auch im Betrieb des Systems können die Schritte S7 - S9 regelmäßig wiederholt werden, um ständig aktuelle temporäre Informationen über Staus etc. zur Verfügung zu haben, oder auch um nach Bedarf kartographische Information nachzuladen, wenn das Fahrzeug die von den im Navigationssystem vorhandenen kartographischen Informationen abgedeckte Region verlässt.

Das Übertragungssystem der Fig. 1 und das datenverarbeitende Gerät der Fig. 2 eignet sich auch für andere Anwendungen, z.B. im Rahmen eines Telematiksystems wie etwa zum Flottenmanagement, wie im Folgenden, wiederum mit Bezug auf das Flussdiagramm der Fig. 3, erläutert wird.

Betrachtet wird eine Firma mit einem Fuhrpark, der eine Mehrzahl von mit Datenverarbeitungsgeräten gemäß Fig. 2 ausgestatteten Fahrzeugen 2 umfasst, und einer Mehrzahl von Mitarbeitern, die an unterschiedlichen Projekten arbeiten, für die es notwendig sein kann, eines der Fahrzeuge zu benutzen, und einem zentralen Server 1, der die Bewegungen der Fahrzeuge 2 überwacht, um die Kosten den verschiedenen Projekten zuzuordnen. Wenn sich bei einem Mitarbeiter der Bedarf ergibt, eines der Fahrzeuge 2 zu nutzen, so kann er in Schritt S2 von einem Arbeitsplatzrechner 9 aus, unter Angabe einer Identifikation des Projekts vom zentralen Server 1 die Übertragung von permanenter Information zum Aufspielen auf einen tragbaren Datenträger wie etwa eine Diskette, eine Chipkarte oder dergleichen, anfordern. Der zentrale Server 1 berechnet (S3) und liefert (S4) diese Information, in der eine Identifikation des Projektes enthalten ist, an den Arbeitsplatzrechner 9, wo der Mitarbeiter sie auf den Datenträger übertragen kann (S5). Mit diesem Datenträger begibt er sich zu einem beliebigen Fahrzeug 2, und führt ihn in dessen Lesegerät 5 ein.

Beim Anlassen des Fahrzeugs (S6) sendet der Bordcomputer 3 in Schritt S7 eine Anfrage an den Server 1, in der er die Projektnummer sowie weitere für die Abrechnung der Fahrtkosten relevante Angaben, insbesondere den aktuellen Kilometerstand, überträgt. Der zentralen Server überprüft in Schritt S8, ob das Fahrzeug freigegeben werden kann. Eine solche Freigabe könnte zu verweigern sein, wenn das angegebene Projekt abgeschlossen oder sein Etat erschöpft ist (Diese Situation kann auftreten, wenn ein Datenträger nach seiner Erstellung über einen längeren Zeitraum mehrfach zum Freischalten eines Fahrzeugs benutzt werden kann), oder wenn es sich um ein Projekt geringer Priorität handelt, und das Fahrzeug für ein höherrangiges Projekt in Reserve gehalten werden muss. Wenn die Legitimationsprüfung S8 ergibt, dass das Fahrzeug benutzt werden kann, wird in Schritt S9 ein digitaler Schlüssel übertragen, der den Bordcomputer veranlasst, in Schritt S10 eine elektronische Wegfahrsperre aufzuheben, so dass das Fahrzeug angelassen werden kann.

Eine weitere wichtige Anwendung der Erfindung ist die Implementierung einer neuen Anwendung im Rahmen eines bestehenden Telematiksystems, wie im Folgenden wiederum unter Bezugnahme auf Fig. 3 beschrieben. Auf dem zentralen Server 1 dieses Systems stellt ein Betreiber einen zur Nutzung der neuen Anwendung erforderlichen Datenbestand, unterteilt in einen permanenten Teil - einen Programmcode - und einen temporären Teil - zeitlich veränderliche Daten -, bereit. Das System hat eine Anzahl von Benutzern, deren Fahrzeuge 2 mit den für die Nutzung der bislang angebotenen Dienste erforderlichen Geräten ausgestattet sind. Der Programmcode ist so ausgelegt, dass er von diesen Geräten ausführbar ist.

Der Betreiber informiert die Benutzer über die Verfügbarkeit des neuen Dienstes, z. B. durch Versenden einer E-Mail an die Computer 9 der einzelnen Benutzer oder durch eine per Funk an die Telematikgeräte in den einzelnen Fahrzeugen 2 übertragene Nachricht. Hierfür kann beispielsweise ein Kurznachrichtendienst (SMS) in einem Mobilfunkkommunikationsnetz wie etwa GSM oder UMTS genutzt werden, das die Telematikgeräte auch zur Datenübertragung im Rahmen der bereits implementierten Telematikdienste nutzen. Alternativ kann unter den im Rahmen der bereits implementierten Telematikdienste zwischen den Geräten und dem zentralen Server ausgetauschten Nachrichten ein Nachrichtentyp vorgesehen werden, der es den Geräten ermöglicht, die Verfügbarkeit neuer Dienste beim zentralen Server 1 anzufragen, oder der es dem zentralen Server 1 ermöglicht, den Geräten die Verfügbarkeit dieses Dienstes mitzuteilen.

Der durch die E-Mail oder eine diesbezügliche Anzeige an seinem Telematikgerät auf die Verfügbarkeit des neuen Dienstes aufmerksam gemachte Benutzer kann nun entscheiden, ob er den angebotenen Dienst nutzen möchte.

Wenn er sich für die Nutzung des neuen Dienstes entscheidet, so kommen insbesondere zwei Wege in Betracht, um dem zentralen Server diese Entscheidung mitzuteilen und dadurch die Übertragung des Programmcodes anzufordern (Schritt S2). Der eine ist die Übertragung per Funk von dem Telematikgerät an den zentralen Server 1, und zwar wie oben erwähnt insbesondere in Form einer SMS-Nachricht oder einer Nachricht eines hierfür vorgesehenen Typs des bereits implementierten Dienstes. In diese Nachricht bindet das Telematikgerät selbsttätig seine Identität betreffende Daten wie etwa eine Seriennummer oder Modellbezeichnung oder andere Angaben zu seiner technischen Ausstattung ein, die es dem zentralen Server ermöglichen, unter mehreren Versionen des Programmcodes des neuen Dienstes die für dieses Gerät geeignete auszuwählen. Des weiteren wird in der Nachricht eine Bezeichnung eines Zwischenservers übertragen, an die der Programmcode übermittelt werden soll. Diese Bezeichnung gibt der Benutzer zuvor in Schritt S1 zweckmäßigerweise manuell ein; hier kann er beispielsweise seine eigene E-Mail-Adresse angeben. Der zweite Weg ist die Übertragung vom Zwischenserver, im Allgemeinen dem persönlichen Computer 9 des Benutzers, an den zentralen Server 1. Dieser Weg hat den Vorteil, dass umfangreiche Informationen über den neuen Dienst - z. B. per Internet - an den Benutzer übermittelt werden können, um diesem eine fundierte Entscheidung darüber zu ermöglichen, ob er den neuen Dienst nutzen will oder nicht. Vom zentralen Server 1 zum Auswählen der korrekten Programmcode-Version benötigte Informationen über das Telematikgerät wird der Benutzer in diesem Fall in Schritt S1 im Allgemeinen an seinem Computer 9 manuell eingeben.

Der zentrale Server 1 erkennt anhand der empfangenen Nachricht, an welchen Computer 9 der Programmcode gesendet werden muss (Schritt S3) und überträgt ihn dorthin (S4). Die weitere Übertragung vom Computer 9 auf das Telematikgerät des Fahrzeugs 2 läuft ab wie oben beschrieben.

Ein weiteres Anwendungsbeispiel der Erfindung ist die automatische Funktionsprüfung von Baugruppen eines mit einem datenverarbeitenden Gerät gemäß Fig. 2 ausgestattetem Kraftfahrzeugs. Auch diese Funktionsprüfung ist durch entsprechende Software-Ausstattung des mit den diversen Sensoren und Aktoren 7 verbundenen Bordcomputers 3 möglich. Permanente Information, die der Bordcomputer zur Durchführung einer solchen Funktionsprüfung benötigt, und die wie bereits oben beschrieben in Schritten S1 bis S4 an den Bordcomputer 3 übertragen werden kann, umfasst einen Satz von Softwarefunktionen zum Abfragen der Sensoren und Ansteuern der Aktoren, für die Übermittlung der Erfassungsergebnisse an den zentralen Server 1 sowie Dialogfunktionen, die es dem Benutzer ermöglichen, über die Mensch-Maschine-Schnittstelle 4, gegebenenfalls unter Angabe einer als gestört vermuteten Baugruppe, einen Selbsttest auszulösen.

Ein Beispiel für den Ablauf des Selbsttests wird anhand des Flussdiagramms von Fig. 4 beschrieben. Dabei wird angenommen, dass die zum Durchführen des Selbsttests erforderliche permanente Information bereits in den Bordcomputer 3 geladen ist. Wenn der Benutzer den Befehl zum Ausführen eines Selbsttests in Schritt S11 eingibt, so sendet der Bordcomputer 3 in Schritt S12 eine Anfrage an den zentralen Server, in der unter anderem genaue Angaben zum Fahrzeugmodell enthalten sind. Anhand dieser Angaben stellt der zentrale Server in Schritt S13 aus bei ihm gespeicherten Programmbestandteilen, gegebenenfalls unter Ausnutzung der mitübertragenen Angabe zur vermuteten Störungsursache, ein Prüfprogramm zusammen, das in Schritt S14 über das Mobilfunk-Kommunikationssystem 14 an den Bordcomputer 3 übertragen wird. Da die hardwarenahen Funktionen zum Ansprechen der Sensoren und Aktoren 7 bereits am Bordcomputer 3 vorhanden sind, brauchen sie nicht vom zentralen Server 1 per Funk übertragen zu werden, was zum einen die zu übertragende Datenmenge reduziert und zum anderen die Erstellung des zu übertragenden Prüfprogramms vereinfacht, da technische Details der verschiedenen Modelle von Sensoren und Aktoren, die in diversen Fahrzeugen verbaut sein können, bei der Erstellung des Prüfprogramms nicht berücksichtigt werden müssen.

Das in Schritt S15 empfangene Prüfprogramm wird in Schritt S16 vom Bordcomputer 3 ausgeführt. Wenn die Auswertung seiner Ergebnisse in Schritt S17 zur eindeutigen Erkennung einer Störungsursache führt, kann das Ergebnis in Schritt S18 unmittelbar an den Hauptserver zurückgemeldet werden. Gleichzeitig kann das Ergebnis auf einem Anzeigeschirm der Mensch-Maschine-Schnittstelle 4 auch dem Benutzer angezeigt werden. Der zentrale Server 1 kann nun anhand des Ergebnisses einerseits und von in der Anfrage des Schritts S12 übertragenen Information zum Standort des Fahrzeugs andererseits eine zum Standort des Fahrzeugs benachbarte Werkstatt identifizieren und dort abfragen, ob ein gegebenenfalls zur Reparatur benötigtes Ersatzteil vorrätig ist. Ist dies nicht der Fall, kann er weitere Werkstätten überprüfen, bis eine gefunden ist, wo das Ersatzteil vorhanden ist, oder er kann veranlassen, dass das Ersatzteil einer der Werkstätten zugeschickt wird. Angaben zur identifizierten Werkstatt werden zweckmäßigerweise wiederum an den Bordcomputer 3 übertragen, so dass dieser sie zusammen mit dem Prüfergebnis in Form einer Empfehlung zur Behebung der Störung anzeigen kann.

Wenn die Auswertung des Ergebnisses in Schritt S17 noch keinen eindeutigen Rückschluss auf die Ursache der Störung zulässt, wird in Schritt S19 erneut eine Funkverbindung zum zentralen Server 1 aufgebaut, um die Ergebnisse zu übertragen und ein anhand dieser Ergebnisse neu zusammengestelltes Prüfprogramm vom zentralen Server anzufordern und dann nach Schritt S15 zurückzukehren.

Anstatt die Auswertung der von den Sensoren gelieferten Erfassungsergebnisse im Bordcomputer 3 vorzunehmen, ist es auch möglich, sie über das Mobilfunknetz 14 an den zentralen Server zu übermitteln, um diesen die Auswertung vornehmen zu lassen. Die per Funk zu übertragende Datenmenge ist dann zwar im Allgemeinen höher als bei lokaler Auswertung im Bordcomputer 3, sie kann jedoch dennoch wirtschaftlich sein, wenn die Auswertung rechenintensiv ist und die Kapazitäten des Bordcomputers 3 übersteigt, oder wenn die vollständige Übertragung der Auswertungsroutinen an den Bordcomputer in Schritt S14 einen hohen Zeitaufwand erfordert.

## Patentansprüche

1. Verfahren zum Inbetriebnehmen einer Anwendung in einem mobilen informationsverarbeitenden Gerät, wobei für den Betrieb der Anwendung ein Informationsbestand in dem Gerät erforderlich ist, mit den Schritten
a) Bereitstellen eines permanenten und eines temporären Teils des Informationsbestandes,
b) leitungsgebundenes Übertragen (S4) des permanenten Teils von einem zentralen Server (1) an einen Zwischenserver (9),
c) Übertragen (S5) des permanenten Teils von dem Zwischenserver zu dem Gerät (9) auf einem ersten Übertragungsweg und Speichern dort,
d) Übertragen (S9, S14) des temporären Teils auf dem Funkweg, wobei der Funkweg einen von dem ersten Übertragungsweg verschiedenen zweiten Übertragungsweg darstellt, und
e) Ausführen der Anwendung,
**dadurch gekennzeichnet, dass** die Anwendung ein Prüfprogramm zum Prüfen der Funktionalität und Diagnostizieren von Funktionsstörungen des mobilen Geräts oder einer daran angeschlossenen Vorrichtung ist.

2. Verfahren nach Anspruch 1, **dadurch gekennzeichnet, dass** Schritt b) durch Übertragen einer Anforderung von dem Zwischenserver (9) oder dem Gerät an den zentralen Server (1) ausgelöst wird.

3. Verfahren nach Anspruch 2, **dadurch gekennzeichnet, dass** die Übertragung (S4) in Schritt b) über eine Wählverbindung erfolgt.

4. Verfahren nach Anspruch 2 oder 3, **dadurch gekennzeichnet, dass** vor Ausführung des Schritts b) Daten von dem Gerät an den zentralen Server (1) übertragen werden (S2), die Angaben zur Identität des mobilen Geräts oder zu dessen Aufenthaltsort beinhalten.

5. Verfahren nach Anspruch 4, **dadurch gekennzeichnet, dass** anhand von übertragenen Daten zur Identität des Geräts unter mehreren Versionen des am zentralen Server (1) bereitgestellten temporären Teils eine Version zur Übertragung ausgewählt wird.

6. Verfahren nach einem der vorhergehenden Ansprüche, **dadurch gekennzeichnet, dass** die Übertragung (S5) in Schritt c) über eine Leitung oder über ein lokales Netz oder über einen tragbaren Datenträger erfolgt.

7. Verfahren nach einem der vorhergehenden Ansprüche, **dadurch gekennzeichnet, dass** dem Schritt d) eine Übertragung (S 7) von für das mobile Gerät spezifischer Information auf dem Funkweg von dem mobilen Gerät an den zentralen Server (1) vorangeht, und dass Schritt d) (S9, S14) nur durchgeführt wird, wenn der zentrale Server (1) anhand der spezifischen Information das mobile Gerät als zum Empfang des temporären Teils geeignet erkennt.

8. Verfahren nach Anspruch 7, **dadurch gekennzeichnet, dass** die Übertragung (S7) der spezifischen Information gesteuert durch den permanenten Teil des Informationsbestandes abläuft.

9. Verfahren nach einem der vorhergehenden Ansprüche, **dadurch gekennzeichnet, dass** der temporäre Teil von dem zentralen Server (1) anhand von zuvor von dem Gerät auf dem Funkweg übermittelter Daten berechnet (S8, S13) wird.

10. Verfahren nach einem der vorhergehenden Ansprüche, **dadurch gekennzeichnet, dass** das mobile Gerät Teil des elektronischen Systems eines Kraftfahrzeugs ist.

11. Verfahren nach einem der vorhergehenden Ansprüche, **dadurch gekennzeichnet, dass** der temporäre Teil geographische Information, insbesondere geographische Information von nur zeitweiliger Gültigkeit, umfasst.

12. Verfahren nach einem der vorhergehenden Ansprüche, **dadurch gekennzeichnet, dass** der temporäre Teil während des Betriebs des Geräts von Zeit zu Zeit aktualisiert wird.

## Claims

1. Method for starting up an application in a mobile information-processing appliance, wherein operation of the application requires a stock of information in the appliance, having the steps of
a) providing a permanent and a temporary portion of the stock of information,
b) transmitting (S4) the permanent portion from a central server (1) to an intermediate server (9) by cable,
c) transmitting (S5) the permanent portion from the intermediate server to the appliance (9) on a first transmission path and storing it there,
d) transmitting (S9, S14) the temporary portion on the radio path, the radio path being a second transmission path, which is different from the first transmission path, and
e) executing the application,
**characterized in that** the application is a checking program for checking the functionality and diagnosing malfunctions of the mobile appliance or an apparatus connected thereto.

2. Method according to Claim 1, **characterized in that** step b) is initiated by transmission of a request from the intermediate server (9) or the appliance to the central server (1).

3. Method according to Claim 2, **characterized in that** the transmission (S4) in step b) is effected via a switched connection.

4. Method according to Claim 2 or 3, **characterized in that** prior to the execution of step b) data are transmitted (S2) from the appliance to the central server (1) which contain statements relating to the identity of the mobile appliance or relating to the whereabouts thereof.

5. Method according to Claim 4, **characterized in that** transmitted data relating to the identity of the appliance are used to select one version from a plurality of versions of the temporary portion provided on the central server (1) for transmission.

6. Method according to one of the preceding claims, **characterized in that** the transmission (S5) in step c) is effected via a cable or via a local area network or via a portable data storage medium.

7. Method according to one of the preceding claims, **characterized in that** step d) is preceded by a transmission (S7) of information specific to the mobile appliance on the radio path from the mobile appliance to the central server (1), and **in that** step d) (S9, S14) is performed only if the central server (1) recognizes the mobile appliance as being suitable for reception of the temporary portion on the basis of the specific information.

8. Method according to Claim 7, **characterized in that** the transmission (S7) of the specific information takes place under the control of the permanent portion of the stock of information.

9. Method according to one of the preceding claims, **characterized in that** the temporary portion is calculated (S8, S13) by the central server (1) using data transmitted by the appliance on a radio path beforehand.

10. Method according to one of the preceding claims, **characterized in that** the mobile appliance is part of the electronic system of a motor vehicle.

11. Method according to one of the preceding claims, **characterized in that** the temporary portion comprises geographical information, particularly geographical information having only temporary validity.

12. Method according to one of the preceding claims, **characterized in that** the temporary portion is updated from time to time during the operation of the appliance.

## Revendications

1. Procédé pour la mise en service d'une application dans un appareil de traitement d'information mobile, dans lequel une base d'informations est nécessaire dans l'appareil pour le fonctionnement de l'application, comprenant les étapes consistant à :
a) mettre en place une partie permanente et une partie temporaire de ladite base d'informations,
b) transmettre (S4) la partie permanente par connexion filaire d'un serveur central (1) à un serveur intermédiaire (9),
c) transmettre (S5) la partie permanente sur un premier trajet de transmission du serveur intermédiaire à l'appareil (9), et la stocker dans celui-ci,
d) transmettre (S9, S14) la partie temporaire sur le trajet radio, le trajet radio représentant un second trajet de transmission différent du premier trajet de transmission, et
e) exécuter l'application,
**caractérisé en ce que** l'application est un programme de test permettant de tester la fonctionnalité et de diagnostiquer des dysfonctionnements de l'appareil mobile ou d'un dispositif connecté à celui-ci.

2. Procédé selon la revendication 1, **caractérisé en ce que** l'étape b) est déclenchée par transmission d'une demande par le serveur intermédiaire (9) ou l'appareil au serveur central (1).

3. Procédé selon la revendication 2, **caractérisé en ce que** la transmission (S4) de l'étape b) s'effectue par l'intermédiaire d'une liaison de commutation.

4. Procédé selon la revendication 2 ou 3, **caractérisé en ce qu'**avant l'exécution de l'étape b), des données sont transmises (S2) de l'appareil au serveur central (1), celles-ci contenant des informations sur l'identité de l'appareil mobile ou sa localisation.

5. Procédé selon la revendication 4, **caractérisé en ce qu'**une version est sélectionnée pour la transmission sur la base de données transmises concernant l'identité de l'appareil parmi plusieurs versions de la partie temporaire mise en place sur le serveur central (1).

6. Procédé selon l'une quelconque des revendications précédentes, **caractérisé en ce que** la transmission (S5) de l'étape c) est réalisée par l'intermédiaire d'une ligne ou par l'intermédiaire d'un réseau local ou par l'intermédiaire d'un support de données portable.

7. Procédé selon l'une quelconque des revendications précédentes, **caractérisé en ce que** l'étape d) est précédée par une transmission (S7) d'informations spécifiques de l'appareil mobile sur le trajet radio de l'appareil mobile au serveur central (1), et **en ce que** l'étape d) (S9, S14) n'est exécutée que si le serveur central (1) détecte que l'appareil mobile est apte à recevoir la partie temporaire sur la base des informations spécifiques.

8. Procédé selon la revendication 7, **caractérisé en ce que** la transmission (S7) des informations spécifiques s'effectue de manière commandée par la partie permanente de la base d'informations.

9. Procédé selon l'une quelconque des revendications précédentes, **caractérisé en ce que** la partie temporaire est calculée (S8, S13) par le serveur central (1) sur la base de données préalablement transmises par l'appareil sur le trajet radio.

10. Procédé selon l'une quelconque des revendications précédentes, **caractérisé en ce que** l'appareil mobile fait partie du système électronique d'un véhicule à moteur.

11. Procédé selon l'une quelconque des revendications précédentes, **caractérisé en ce que** la partie temporaire comprend des informations géographiques, notamment des informations géographiques n'ayant qu'une validité temporaire.

12. Procédé selon l'une quelconque des revendications précédentes, **caractérisé en ce que** la partie temporaire est actualisée de temps en temps pendant le fonctionnement de l'appareil.
